# FASCICULE DE BREVET EUROPEEN

(11) **EP 2 394 806 B1**
(45) Date de publication et mention de la délivrance du brevet: **17.08.2016**
(21) Numéro de dépôt: 11305709.5
(22) Date de dépôt: 08.06.2011
(51) Int. Cl.: B29C 65/18, B29C 65/48, B29C 65/50, B29C 65/00, B65B 51/06, B65D 30/20, B65D 33/16, B65D 75/66, B65D 75/68, B65D 77/36

(54) **Sac comportant une bande rapportée pour sa fermeture et dispositif de dépose d'une bande rapportée pour obtenir un sac selon l'invention**
Beutel, der mit einem Einsatzband zum Verschließen ausgestattet ist, und Vorrichtung zum Aufbringen des Einsatzbandes zur Herstellung eines Beutels wie in der Erfindung vorgesehen
Bag comprising an added strip for sealing same and device for removing an added strip in order to obtain a bag according to the invention

(30) Priorité: 09.06.2010 FR 1054533
(43) Date de publication de la demande: 14.12.2011
(73) Titulaire: Cetec Industrie Conditionnement, 24650 Chancelade (FR)
(72) Inventeur: Labrue, Régis, 24000 Périgueux (FR); Gerbeaud, Alain, 24600 Ribérac (FR)
(74) Mandataire: Fantin, Laurent

(56) Documents cités:
- BE-A- 498 656
- FR-A- 1 190 173
- FR-A1- 2 897 844
- FR-A1- 2 913 000
- FR-A1- 2 926 067

## Description

La présente invention se rapporte à un sac comportant une bande rapportée pour sa fermeture. Elle se rapporte également à un dispositif assurant la dépose de ladite bande rapportée sur le sac.

Pour la fermeture d'un sac, une première solution consiste à plier la tête du sac puis à coller la partie pliée contre la paroi extérieure du sac. Selon les cas, la tête de sac peut comprendre un ou deux plis, au moins le dernier élément rabattu étant collé contre la face extérieure du sac.

Cette solution ne donne pas pleinement satisfaction car il est peu aisé de décoller les parties de la tête repliées et collées au moment de l'ouverture du sac.

Aussi, une autre solution consiste à plier au moins une fois la tête du sac et à la maintenir pliée grâce à une bande rapportée dont l'une des faces est collée en partie contre la partie repliée de la tête du sac et en partie contre l'une des deux faces extérieures du sac. Cette solution est décrite notamment dans le document EP-0069299.

Selon un mode de réalisation, cette bande rapportée est en papier avec une face enduite d'une colle thermo-activable ou d'une enduction de polyéthylène pour pouvoir être solidarisée au sac.

Pour ouvrir, il faut décoller ou couper la bande rapportée pour pouvoir déplier les plis de la tête du sac. Généralement, les utilisateurs découpent la bande rapportée entre sa partie collée à la tête du sac repliée et sa partie collée à la face extérieure du sac à l'aide d'un objet tranchant tel qu'un couteau.

Pour faciliter la découpe de la bande rapportée sans recourir à un élément tranchant, une solution consiste à prévoir une bande dite d'arrachage au niveau de la face intérieure de la bande rapportée, avec éventuellement une pré-découpe sur une extrémité de la bande rapportée, pour pouvoir découper ladite bande rapportée en tirant sur ladite bande d'arrachage. Un tel agencement est notamment décrit dans le document FR-2.897.844.

Cette solution est satisfaisante pour l'ouverture du sac, l'utilisateur n'ayant qu'à tirer sur la bande d'arrachage pour découper la bande rapportée et ouvrir le sac. Cependant pour certaines applications, on doit éviter que la partie arrachée ne tombe et se mélange à d'autres éléments. Le document BE-A-498656, considéré comme l'état de la technique le plus proche décrit un sac avec caracteristiques du préambule de la revendication 1.

Aussi, la présente invention vise à améliorer les systèmes de fermeture de l'art antérieur.

A cet effet, l'invention a pour objet un sac comprenant deux parois latérales dont les parties supérieures formant la tête du sac sont plaquées l'une contre l'autre et pliées selon au moins une ligne de pliage de manière à ce que la partie au dessus de ladite ligne de pliage soit rabattue contre la face extérieure d'une des parois latérales ainsi qu'au moins une bande rapportée reliée d'une part à la partie repliée de la tête du sac, et d'autre part à la face extérieure de la paroi latérale disposée au dessous de la partie pliée, ladite bande rapportée comportant au moins une bande d'arrachage intercalée entre le sac et ladite bande rapportée et disposée au droit de la zone de la bande rapportée qui n'est pas liée à la partie rabattue de la tête du sac ou à la face extérieure de la paroi latérale, caractérisé en ce qu'une bande rapportée apte à être déchirée par une bande d'arrachage est plaquée et collée contre au moins une partie de la largeur de chaque paroi latérale du sac.

D'autres caractéristiques et avantages ressortiront de la description qui va suivre de l'invention, description donnée à titre d'exemple uniquement, en regard des dessins annexés sur lesquels :
- la figure 1 est une vue en coupe d'une tête de sac selon un mode de réalisation,
- la figure 2 est une vue en coupe d'une tête de sac selon un autre mode de réalisation,
- la figure 3 est une vue en perspective d'une tête de sac équipée d'une bande rapportée selon l'invention,
- la figure 4 est une vue de dessus d'une première variante de l'invention,
- la figure 5 est une vue de dessus d'une autre variante de l'invention, et
- les figures 6A à 6C sont des représentations schématiques d'un dispositif pour la dépose d'une bande rapportée sur un sac selon l'invention à différents stades de la dépose.

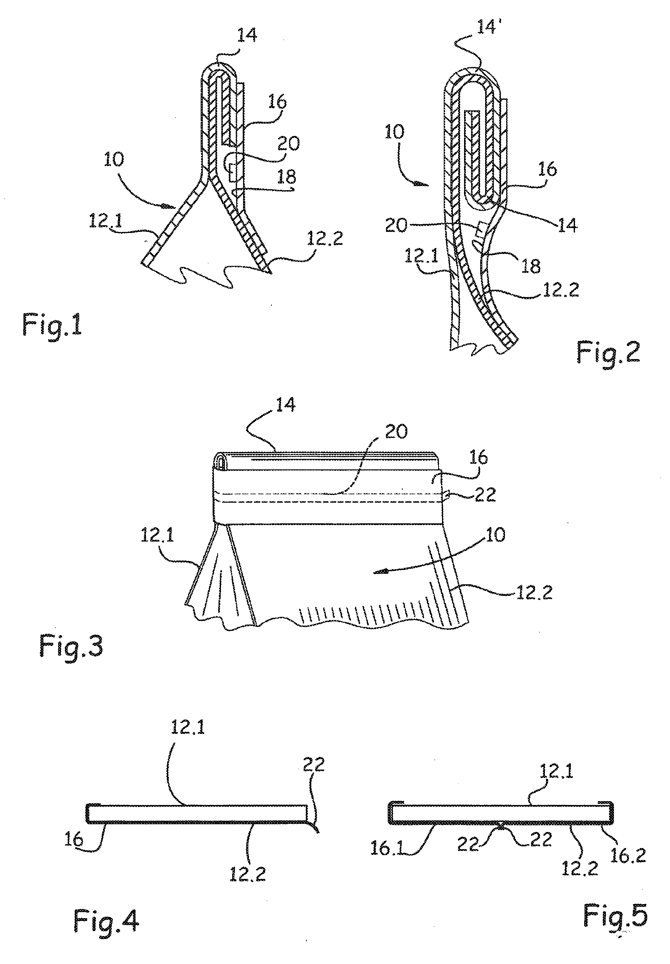

Sur les figures 1 et 2, on a représenté la partie supérieure d'un sac 10.

De manière connue, un sac peut avoir une ou plusieurs épaisseurs et être en matière plastique et/ou en papier. Selon un mode de réalisation, le sac 10 comprend deux parois latérales 12.1 et 12.2 reliées directement ou par l'intermédiaire de soufflets de manière à former un tube. La partie inférieure des parois latérales 12.1 et 12.2 est fermée par tout moyen approprié, notamment par pliage et collage.

Après remplissage, la partie supérieure du sac appelée également tête de sac est fermée.

De manière connue, pour fermer la tête du sac, les parois latérales 12.1 et 12.2 sont plaquées l'une contre l'autre, les soufflets étant disposés entre lesdites parois latérales, puis pliées selon au moins une ligne de pliage 14, sensiblement parallèle aux bords supérieurs desdites parois latérales, de manière à ce que la partie au dessus de la ligne de pliage soit rabattue contre la face extérieure d'une des parois latérales 12.2.

Selon un premier mode de réalisation illustré sur la figure 1, la tête du sac comprend une ligne de pliage 14.

Selon un autre mode de réalisation illustré sur la figure 2, la tête du sac comprend deux lignes de pliage 14, 14' sensiblement parallèles.

Selon les cas, les parties rabattues peuvent être collées ou non. De préférence, comme illustré sur les figures 1 et 2, les parties rabattues ne sont pas collées. Selon les variantes, les bords supérieurs des parois latérales peuvent être disposés à la même hauteur ou à des hauteurs différentes. De même, les différentes épaisseurs d'une même paroi latérale peuvent avoir la même hauteur ou avoir des découpes échelonnées.

Aussi, l'invention n'est pas limitée aux modes de réalisation illustrés sur les figures 1 et 2 mais couvre les différentes solutions de découpe et de pliage des parties supérieures des parois latérales d'un sac. Ces différentes solutions ne sont pas décrites car elles sont connues de l'homme du métier.

De manière générale, au moins une épaisseur d'une première paroi latérale est pliée de manière à ce que la face intérieure de ladite épaisseur soit plaquée contre la face extérieure de la seconde paroi latérale.

Selon une technique connue, illustrée sur les figures 1 à 3, pour maintenir la tête de sac pliée, au moins une bande rapportée 16 est reliée d'une part à la partie repliée de la tête du sac, et d'autre part à la face extérieure de la paroi latérale disposée au dessous de la partie pliée.

Cette bande rapportée 16 peut être en différents matériaux et avoir une ou plusieurs épaisseurs.

Selon un mode de réalisation, cette bande rapportée 16 est en papier, de préférence en papier kraft, et elle est soudée ou collée à la partie rabattue et à la face extérieure de la paroi latérale.

Selon un mode de réalisation, l'une des faces de la bande rapportée 16, appelée par la suite face enduite 18, peut être revêtue d'une colle thermo-activable, par exemple une colle de type Hot Melt ou une enduction de polyéthylène.

Pour la fixer sur la tête du sac, la bande rapportée 16 est chauffée et plaquée contre la tête du sac. Après refroidissement, la bande rapportée 16 est solidarisée d'une part à la partie rabattue et à la face extérieure de la paroi latérale.

De manière connue, pour faciliter la découpe de la bande rapportée 16, une bande d'arrachage 20 est intercalée entre le sac et la bande rapportée et disposée au droit de la zone de la bande rapportée 16 qui n'est pas collée à la partie rabattue ou à la face extérieure de la paroi latérale.

Selon les modes de réalisation, pour faciliter sa préhension, une amorce d'arrachage 22 est prévue. Ainsi, la bande d'arrachage 20 peut s'étendre au-delà de la bande rapportée 16 comme illustré sur la figure 3, ou des découpes ou pré-découpes peuvent être disposées de part et d'autre de la bande d'arrachage 20 au niveau d'au moins un des bords de la bande rapportée 16.

La bande d'arrachage 20 a une largeur, inférieure à celle de la bande rapportée, de l'ordre de 3 à 10 mm, de préférence de l'ordre de 7 mm. Cette bande d'arrachage est réalisée en un matériau suffisamment résistant permettant de découper la bande rapportée lorsqu'on tire sur ladite bande d'arrachage 20.

De préférence, la bande d'arrachage est en bolduc ou en un matériau similaire peu cher.

Selon un mode de réalisation, le bolduc peut être encollé pour être fixé sur la bande rapportée.

Selon un autre mode de réalisation décrit dans le document FR-2.897.844, la bande d'arrachage 20 n'est pas encollée pour être solidarisée à la bande rapportée 16. Pour solidariser la bande d'arrachage 20 à la bande rapportée 16, la face enduite 18 de la bande rapportée est chauffée au niveau de la zone où doit être placée la bande d'arrachage 20 de manière à activer la colle, et ladite bande d'arrachage 20 est plaquée contre la bande rapportée 16 afin d'être solidarisée à ladite bande rapportée grâce à la colle thermo-active prévue au niveau de ladite bande rapportée.

Toutefois, d'autres solutions peuvent être envisagées pour solidariser la bande d'arrachage 20 à la bande rapportée 16.

Selon l'invention, une bande rapportée 16 est plaquée et collée contre au moins une partie de la largeur de chaque paroi latérale 12.1 et 12.2 du sac. Cet agencement permet de conserver une partie de la bande d'arrachage 20 solidaire du sac même après l'ouverture.

Selon un mode de réalisation illustré sur les figures 3 et 4, la bande rapportée 16 comprend une première partie solidarisée à la partie rabattue et à une première paroi latérale du sac 12.2 et une seconde partie solidarisée à l'autre paroi latérale 12.1 du sac. Ainsi, la bande rapportée a une longueur supérieure à la largeur de la tête du sac fermée de manière à s'étendre sur toute la largeur du sac au niveau de la paroi latérale 12.2 du sac au niveau de laquelle la partie supérieure du sac est rabattue et au moins sur une partie de l'autre paroi latérale 12.1 du sac.

L'amorce 22 d'arrachage est prévue au niveau de l'extrémité de la bande rapportée 16 qui est solidarisée à la paroi latérale 12.2 du sac contre laquelle est rabattue la tête du sac. Ainsi, en tirant sur la bande d'arrachage 20, on peut déchirer la bande rapportée 16 sur toute la largeur du sac de façon à ouvrir complètement le sac tout en conservant la bande d'arrachage 20 solidaire du sac. Selon un autre mode de réalisation illustré sur la figure 5, la tête de sac peut comprendre deux bandes rapportées, au moins l'une d'elle ayant une bande d'arrachage. Dans ce cas, la ou les bande(s) rapportée(s) qui comprend une bande d'arrachage s'étend sur les deux parois latérales du sac. Selon l'exemple illustré, une première bande 16.1 rapportée s'étend sur une partie de la paroi latérale 12.2 du sac contre laquelle est rabattue la partie supérieure du sac et sur une partie de l'autre paroi latérale 12.1 du sac. En parallèle, une seconde bande 16.2 rapportée s'étend sur la partie de la paroi latérale 12.2 du sac contre laquelle est rabattue la partie supérieure du sac qui n'est pas recouverte par la première bande rapportée 16.1 et sur une partie de l'autre paroi latérale 12.1 du sac. Les bandes rapportées 16.1 et 16.2 sont disposées bout à bout dans le prolongement l'une de l'autre. Dans ces cas, les amorces 22 des bandes d'arrachage 20.1 et 20.2 sont prévues aux extrémités des bandes rapportées plaquées contre la paroi latérale 12.2 du sac contre laquelle est rabattue la partie supérieure du sac.

Selon un autre mode de réalisation, la tête de sac peut comprendre une bande rapportée 16 avec une bande d'arrachage 20 dont l'amorce 22 est décalée par rapport au bord du sac. Dans ce cas, la partie de la bande rapportée susceptible d'être découpée par la bande d'arrachage s'étend sur les deux parois latérales du sac de manière à conserver toujours une partie de la bande d'arrachage solidarisée au sac après l'ouverture du sac.

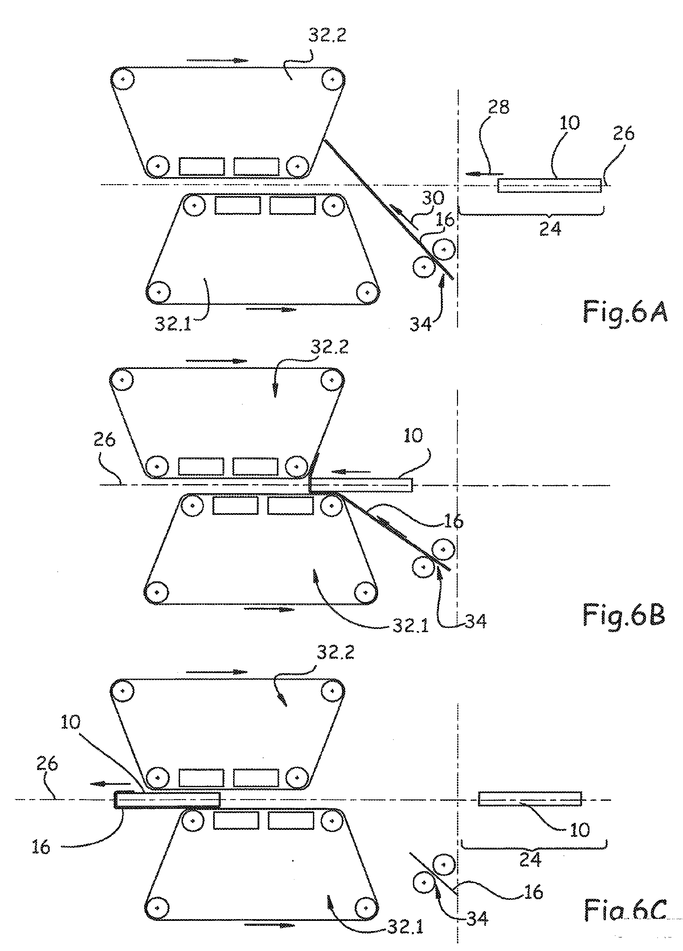

Sur les figures 6A à 6B, on a représenté un dispositif pour solidariser une bande rapportée 16 sur un sac 10. Après le pliage de la tête de sac au niveau d'un poste 24, des moyens connus permettent de faire défiler le sac au niveau du dispositif selon un axe de défilement 26 selon un sens de déplacement indiqué par la flèche 28. La bande rapportée est introduite grâce à des moyens d'alimentation à la verticale selon une direction 30 sécante à l'axe de défilement 26.

Les moyens d'alimentation des bandes d'arrachage et les moyens assurant le défilement des sacs sont synchronisés de manière à ce que la bande rapportée 16 soit disposée de part et d'autre de l'axe de défilement 26 lorsque le sac 10 arrive à son contact. En suivant, les deux éléments défilent entre deux moyens 32.1 et 32.2 disposés de part et d'autre de l'axe de défilement, permettant de les plaquer et d'activer le collage. Ces moyens 32.1 et 32.2 comprennent chacun au moins une courroie ou une bande formant une boucle et comportant au moins une partie parallèle et à proximité de l'axe de défilement 26, des moyens pour provoquer une élévation de température pour activer le collage et des moyens pour presser les courroies ou les bandes disposées de part et d'autre de l'axe de défilement l'une contre l'autre, le sac et la bande rapportée étant intercalés entre elles.

Les moyens 32.1 et 32.2 ne sont pas plus décrits car ils sont connus de l'homme du métier et peuvent être identiques au moyen disposé seulement d'un côté de l'axe de défilement des dispositifs de l'art antérieur permettant de coller la bande rapportée seulement sur une face du sac.

Selon un aspect de l'invention, les moyens 32.1 et 32.2 sont décalés de manière à ce que le moyen 32.1 disposé du même côté de l'axe de défilement que les moyens 34 permettant d'introduire la bande rapportée est décalé vers l'amont selon le sens de défilement 28 par rapport au moyen 32.2 disposé de l'autre côté de l'axe de défilement de manière à ce que la bande rapportée puisse être disposée à cheval de l'axe de défilement lorsque le sac arrive à son contact.

## Revendications

1. Sac comprenant deux parois latérales (12.1, 12.2) reliées au niveau des bords du sac de manière à former un tube, les parties supérieures des deux parois latérales (12.1, 12.2) formant la tête du sac étant plaquées l'une contre l'autre et pliées selon au moins une ligne de pliage (14) de manière à ce que la partie au-dessus de ladite ligne de pliage soit rabattue contre la face extérieure d'une des parois latérales (12.2) ainsi qu'au moins une bande rapportée (16) reliée d'une part à la partie repliée de la tête du sac, et d'autre part à la face extérieure de la paroi latérale disposée au-dessous de la partie pliée, ladite bande rapportée (16) comportant au moins une bande d'arrachage (20) intercalée entre le sac et ladite bande rapportée (16) et disposée au droit de la zone de la bande rapportée (16) qui n'est pas liée à la partie rabattue de la tête du sac ou à la face extérieure de la paroi latérale, la bande rapportée (16) apte à être déchirée par une bande d'arrachage (20) étant plaquée et collée contre au moins une partie de la largeur d'une paroi latérale (12.2) du sac au niveau de laquelle la partie supérieure du sac est rabattue et au moins sur une partie de la largeur de l'autre paroi latérale (12.1) du sac, **caractérisé en ce que** ladite bande rapportée (16) est disposée à cheval sur le bord du sac.

2. Sac selon la revendication 1, **caractérisé en ce que** la bande rapportée (16) a une longueur supérieure à la largeur de la tête du sac fermée de manière à s'étendre sur toute la largeur du sac au niveau de la paroi latérale (12.2) du sac au niveau de laquelle la partie supérieure du sac est rabattue et au moins sur une partie de l'autre paroi latérale (12.1) du sac.

3. Sac selon la revendication 2, **caractérisé en ce que** la bande rapportée (16) comprend une amorce (22) pour la bande d'arrachage (20) disposée au niveau de l'extrémité de la bande rapportée (16) qui est solidarisée à la paroi latérale (12.2) du sac contre laquelle est rabattue la tête du sac.

4. Sac selon la revendication 1, **caractérisé en ce qu'**il comprend au moins une bande rapportée (16) avec une bande d'arrachage (20) et une amorce (22) d'arrachage décalée par rapport au bord du sac et **en ce que** la partie de la bande rapportée (16) susceptible d'être déchirée par la bande d'arrachage (20) s'étend sur les deux parois latérales du sac de manière à conserver toujours une partie de la bande d'arrachage (20) solidarisée au sac après l'ouverture du sac.

5. Sac selon la revendication 4, **caractérisé en ce qu'**il comprend une première bande (16.1) rapportée qui s'étend sur une partie de la paroi latérale (12.2) du sac contre laquelle est rabattue la partie supérieure du sac et sur une partie de l'autre paroi latérale (12.1) du sac et une seconde bande (16.2) rapportée qui s'étend sur la partie de la paroi latérale (12.2) du sac contre laquelle est rabattue la partie supérieure du sac qui n'est pas recouverte par la première bande rapportée (16.1) et sur une partie de l'autre paroi latérale (12.1) du sac, les bandes rapportées (16.1, 16.2) étant disposées bout à bout dans le prolongement l'une de l'autre.

6. Sac selon la revendication 5, **caractérisé en ce que** la première bande rapportée (16.1) comprend une amorce d'arrachage (22) au niveau de son extrémité plaquée contre la paroi latérale (12.2) du sac contre laquelle est rabattue la partie supérieure du sac et **en ce que** la seconde bande rapportée (16.2) comprend une amorce d'arrachage (22) au niveau de son extrémité plaquée contre la paroi latérale (12.2) du sac contre laquelle est rabattue la partie supérieure du sac.

7. Dispositif pour la dépose d'une bande rapportée au niveau de la tête d'un sac selon l'une quelconque des revendications précédentes, **caractérisé en ce qu'**il comprend des moyens d'alimentation pour introduire une bande rapportée (20) selon une direction (30) sécante à un axe de défilement (26) des sacs et des moyens permettant de faire défiler le sac au niveau dudit dispositif selon ledit axe de défilement (26), les moyens d'alimentation des bandes d'arrachage et les moyens assurant le défilement des sacs étant synchronisés de manière à ce que la bande rapportée (16) soit disposée de part et d'autre de l'axe de défilement (26) et à cheval sur le bord du sac lorsque le sac (10) arrive à son contact.

8. Dispositif selon la revendication 7, **caractérisé en ce qu'**il comprend deux moyens (32.1, 32.2) permettant de plaquer le sac et la bande rapportée et d'activer le collage, disposés de part et d'autre de l'axe de défilement de manière à ce que le moyen (32.1) disposé du même côté de l'axe de défilement que les moyens (34) d'alimentation des bandes rapportées est décalé vers l'amont selon le sens de défilement par rapport au moyen (32.2) disposé de l'autre côté de l'axe de défilement afin que la bande rapportée puisse être disposée à cheval de l'axe de défilement (26) lorsque le sac arrive à son contact.

## Patentansprüche

1. Beutel mit zwei Seitenwänden (12.1, 12.2), die im Bereich der Ränder des Beutels verbunden sind, um eine Röhre zu bilden, wobei die oberen Teile der beiden Seitenwände (12.1, 12.2), die den Kopf des Beutels bilden, aneinander angesetzt sind und entlang wenigstens einer Faltlinie (14) gefaltet sind, so dass der oberhalb der Faltlinie gelegene Teil gegen die äußere Seite einer der Seitenwände (12.2) umgeschlagen wird, und mit wenigstens einem Aufbringband (16), das einerseits mit dem umgefalteten Teil des Beutelkopfs und andererseits mit der Außenseite der unterhalb des gefalteten Teils angeordneten Seitenwand verbunden ist, wobei das Aufbringband (16) wenigstens ein Aufreißband (20) aufweist, das zwischen dem Beutel und dem Aufbringband (16) eingebracht ist und direkt unter jenem Bereich des Aufbringbands (16) angeordnet ist, der nicht mit dem umgeschlagenen Teil des Beutelkopfs oder der Außenseite der Seitenwand verbunden ist, wobei das Aufbringband (16), das sich zum Zerreißen durch das Aufreißband (20) eignet, an wenigstens einen Teil der Breite einer Seitenwand (12.2) des Beutels, in deren Bereich der obere Teil des Beutels umgeschlagen ist, und an wenigstens einen Teil der Breite der anderen Seitenwand (12.1) des Beutels angesetzt und angeklebt ist, **dadurch gekennzeichnet, dass** das Aufbringband (16) rittlings auf dem Rand des Beutels angeordnet ist.

2. Beutel nach Anspruch 1, **dadurch gekennzeichnet, dass** das Aufbringband (16) eine Länge hat, die größer als die Breite des geschlossenen Beutelkopfs ist, um sich im Bereich jener Seitenwand (12.2) des Beutels, in deren Bereich der obere Teil des Beutels umgeschlagen ist, über die gesamte Breite des Beutels und über wenigstens einen Teil der anderen Seitenwand (12.1) des Beutels zu erstrecken.

3. Beutel nach Anspruch 2, **dadurch gekennzeichnet, dass** das Aufbringband (16) einen Stummel (22) für das Aufreißband (20) aufweist, der im Bereich des Endes des Aufbringbands (16) angeordnet ist, das mit jener Seitenwand (12.2) des Beutels verbunden ist, gegen die der Beutelkopf umgeschlagen ist.

4. Beutel nach Anspruch 1, **dadurch gekennzeichnet, dass** dieser wenigstens ein Aufbringband (16) mit einem Aufreißband (20) und einem Aufreißstummel (22) aufweist, der bezüglich des Randes des Beutels versetzt ist, und dass das Aufbringband (16), das dazu eingerichtet ist, durch das Aufreißband (20) zerrissen zu werden, sich über die beiden Seitenwände des Beutels erstreckt, um einen Teil des Aufreißbandes (20) nach der Öffnung des Beutels immer mit dem Beutel verbunden zu halten.

5. Beutel nach Anspruch 4, **dadurch gekennzeichnet, dass** dieser ein erstes Aufbringband (16.1) umfasst, das sich über einen Teil jener Seitenwand (12.2) des Beutels erstreckt, gegen die der obere Teil des Beutels umgeschlagen ist, und über einen Teil der anderen Seitenwand (12.1) des Beutels erstreckt, und ein zweites Aufbringband (16.2) aufweist, das sich über einen nicht durch das erste Aufbringband (16.1) abgedeckten Teil jener Seitenwand (12.2) des Beutels erstreckt, gegen die der obere Teil des Beutels umgeschlagen ist, und über einen zweiten Teil der anderen Seitenwand (12.1) des Beutels erstreckt, wobei die Aufbringbänder (16.1, 16.2) untereinander in ihrer Verlängerung aneinanderstoßend angeordnet sind.

6. Beutel nach Anspruch 5, **dadurch gekennzeichnet, dass** das erste Aufbringband (16.1) einen Aufreißstummel (22) im Bereich seines Endes aufweist, das an jene Seitenwand (12.2) des Beutels angesetzt ist, gegen die der obere Teil des Beutels umgeschlagen ist, und dass das zweite Aufbringband (16.2) einen Aufreißstummel (22) im Bereich seines Endes aufweist, das gegen jene Seitenwand (12.2) des Beutels angesetzt ist, gegen die der obere Teil des Beutels umgeschlagen ist.

7. Vorrichtung zum Aufbringen eines Aufbringbands im Bereich des Kopfes eines Beutels nach einem der vorhergehenden Ansprüche, **dadurch gekennzeichnet, dass** diese Zuführmittel aufweisen, um ein Aufbringband (20) in eine Richtung (30) einzuführen, die sich mit einer Durchlaufachse (26) der Beutel schneidet, und Mittel aufweist, die es gestatten, den Beutel im Bereich der Vorrichtung entlang der Durchlaufachse (26) hindurchlaufen zu lassen, wobei die Zuführmittel für die Aufreißbänder und die Mittel, die das Durchlaufen der Beutel gewährleisten, derart synchronisiert sind, dass jenes Aufbringband (16) beiderseits der Durchlaufachse (26) und rittlings auf den Rand des Beutels aufgebracht wird, wenn der Beutel (10) mit diesem in Kontakt tritt.

8. Vorrichtung nach Anspruch 7, **dadurch gekennzeichnet, dass** diese zwei Mittel (32.1, 32.2) aufweist, die es gestatten, den Beutel und das Aufbringband gegeneinander zu pressen und die Beklebung zu aktivieren, und die beiderseits der Durchlaufachse derart angeordnet sind, dass die Mittel (32.1), die auf der gleichen Seite der Durchlaufachse angeordnet sind, wie die Mittel (34) für die Zufuhr der Aufbringbänder, in Durchlaufrichtung vor den Mitteln (32.2) angeordnet sind, die auf der anderen Seite der Durchlaufachse angeordnet sind, so dass jenes Aufbringband rittlings bezüglich der Durchlaufachse (26) angeordnet werden kann, wenn der Beutel mit diesem in Kontakt tritt.

## Claims

1. Bag comprising two lateral walls (12.1, 12.2) linked at the edges of the bag so as to form a tube, the top parts of the two lateral walls (12.1, 12.2) forming the head of the bag being pressed against one another and folded along at least one fold line (14) so that the part above said fold line is folded back against the outer face of one of the lateral walls (12.2) and at least one added strip (16) linked on the one hand to the folded part of the head of the bag, and on the other hand to the outer face of the lateral wall positioned below the folded part, said added strip (16) comprising at least one tear strip (20) inserted between the bag and said added strip (16) and positioned in line with the area of the added strip (16) which is not linked to the folded-back part of the head of the bag or to the outer face of the lateral wall, the added strip (16) capable of being torn by a tear strip (20) being pressed and glued against at least a part of the width of a lateral wall (12.2) of the bag at the level of which the top part of the bag is folded back and at least over a part of the width of the other lateral wall (12.1) of the bag, **characterized in that** said added strip (16) is positioned straddling the edge of the bag.

2. Bag according to Claim 1, **characterized in that** the added strip (16) has a length greater than the width of the head of the closed bag so as to extend over all the width of the bag at the level of the lateral wall (12.2) of the bag at the level of which the top part of the bag is folded back and at least over a part of the other lateral wall (12.1) of the bag.

3. Bag according to Claim 2, **characterized in that** the added strip (16) comprises a leader (22) for the tear strip (20) positioned at the level of the end of the added strip (16) which is secured to the lateral wall (12.2) of the bag against which the head of the bag is folded back.

4. Bag according to Claim 1, **characterized in that** it comprises at least one added strip (16) with a tear strip (20) and a tear leader (22) offset relative to the edge of the bag and **in that** the part of the added strip (16) likely to be torn by the tear strip (20) extends over the two lateral walls of the bag so as to always keep a part of the tear strip (20) secured to the bag after the bag is opened.

5. Bag according to Claim 4, **characterized in that** it comprises a first added strip (16.1) which extends over a part of the lateral wall (12.2) of the bag against which the top part of the bag is folded back and over a part of the other lateral wall (12.1) of the bag and a second added strip (16.2) which extends over the part of the lateral wall (12.2) of the bag against which the top part of the bag which is not covered by the first added strip (16.1) is folded back and over a part of the other lateral wall (12.1) of the bag, the added strips (16.1, 16.2) being arranged end-to-end in the extension of one another.

6. Bag according to Claim 5, **characterized in that** the first added strip (16.1) comprises a tear leader (22) at its end pressed against the lateral wall (12.2) of the bag against which the top part of the bag is folded back and **in that** the second added strip (16.2) comprises a tear leader (22) at its end pressed against the lateral wall (12.2) of the bag against which the top part of the bag is folded back.

7. Device for removing an added strip at the head of a bag according to any one of the preceding claims, **characterized in that** it comprises feed means for introducing an added strip (20) in a direction (30) secant to an axis of travel (26) of the bags and means making it possible to make the bag travel at the level of said device along said axis of travel (26), the feed means of the tear strips and the means ensuring the travel of the bags being synchronized so that the added strip (16) is positioned on either side of the axis of travel (26) and straddling the edge of the bag when the bag (10) arrives in contact therewith.

8. Device according to Claim 7, **characterized in that** it comprises two means (32.1, 32.2) making it possible to press the bag and the added strip and to activate the gluing, positioned on either side of the axis of travel so that the means (32.1) arranged on the same side of the axis of travel as the feed means (34) of the added strips is offset upstream in the direction of travel relative to the means (32.2) positioned on the other side of the axis of travel in order for the added strip to be able to be positioned straddling the axis of travel (26) when the bag arrives in contact therewith.
